# EUROPÄISCHE PATENTANMELDUNG

(11) **EP 0 594 096 A1**
(43) Veröffentlichungstag der Anmeldung: **27.04.1994**
(21) Anmeldenummer: 93116765.4
(22) Anmeldetag: 17.10.1993
(51) Int. Cl.: B29C 53/04, B29C 53/80, B29C 53/84, H01S 3/00

(54) **Verfahren und Vorrichtung zur Verformung, insbesondere zum Biegen, von im wesentlichen flächigen Gegenständen**

(30) Priorität: 19.10.1992 DE 4235192
(71) Anmelder: T.T.K. KUNSTSTOFF-TECHNOLOGIE GmbH, D-81829 München (DE)
(72) Erfinder: Karls, Georg, D-81825 München (DE)
(74) Vertreter: Grape, Knut, Dipl.-Ing.

(57) **Zusammenfassung**

Die Erfindung betrifft ein Verfahren und eine Vorrichtung 10 zur Verformung, insbesondere zum Biegen, von im wesentlichen flächigen Gegenständen (12), wie Platten oder dergleichen, aus erweich- bzw. schmelzbarem Material, umfassend eine im wesentlichen ebenflächige Auflage (14) zur Abstützung des zu biegenden Gegenstandes (12) mit wenigstens zwei Auflageelementen (14a, 14b, 14c), die zum Biegen des Gegenstandes (12) in einem Bereich (18) zwischen zwei Teilflächen (12a, 12b) des Gegenstandes (12) zueinander verschwenkbar sind,
eine Andruckeinrichtung (42) zur lösbaren Befestigung des zu biegenden Gegenstandes (12) auf der Auflage (14),
eine Heizeinrichtung (46) zur Erwärmung bzw. Schmelzung des Bereiches (18) zwischen den beiden Teilflächen (12a, 12b) des Gegenstandes (12), der im wesentlichen der Verschwenkachse der beiden Auflageelementen (14a, 14b) zugeordnet und in Längsrichtung der Verschwenkachse bewegbar ist,
eine Antriebseinrichtung (20) zur Verschwenkung der Auflageelemente (14a, 14b) der Auflage (14) zueinander, sowie
eine Steuereinheit (24) zur Steuerung der Andruckeinrichtung (42), Heizeinrichtung (46) und Antriebseinrichtung (20).

## Beschreibung

Die Erfindung betrifft ein Verfahren und eine Vorrichtung zur Verformung, insbesondere zum Biegen, von im wesentlichen flächigen Gegenständen, wie Platten oder dergleichen, aus erweich- bzw. schmelzbarem Material.

In dem DE-GM 86 11 965.6 ist ein Gehäuse beschrieben, das aus zwei Gehäuseschalen und einer darin eingesetzten Front- sowie Rückplatte gebildet ist. Die beiden Gehäuseschalen sind jeweils aus einer Platte aus Kunststoff hergestellt, die im Bereich von eingefrästen Rillen oder Nuten erweicht und anschließend rechtwinklig abgebogen bzw. abgekantet wird, so daß sich als Gehäuseschale jeweils eine Bodenwand mit zwei senkrechten Seitenwänden ergibt. Einzelheiten über das Verfahren oder eine Vorrichtung zur Herstellung derartiger Gehäuseschalen gehen aus dem DE-GM 86 11 965.6 hingegen nicht hervor.

Des weiteren sind Verfahren und diesbezügliche Vorrichtungen zur Herstellung von kubischen Körpern, Gehäusen oder dergleichen aus erweich- bzw. schmelzbarem Material, beispielsweise aus Kunststoffen, bekannt. Allerdings sind diese Verfahren, wie zum Beispiel das Spritzgießen, aufgrund hoher Werkzeugkosten erst bei großen Stückzahlen wirtschaftlich. Vorserien und kleine Stückzahlen von kubischen Körpern, Gehäusen oder dergleichen sind insofern aus wirtschaftlichen Gründen nicht oder nur kaum realisierbar. Hinzu kommen lange Fertigungslaufzeiten zwischen etwa sechs bis zwölf Monaten von Beginn bis zur Serienlieferung. Um einzelne solcher kubischer Körper, Gehäuse oder dergleichen herstellen zu lassen, muß daher auf den sogenannten Design- oder Modellbau zurückgegriffen werden, wobei jedoch in aller Regel keine reproduzierbaren, fertigungsrelevanten technischen Bauteile geschaffen werden, die auch gleich in Serie gehen können. Des weiteren ist bei diesen Verfahren, wie zum Beispiel beim Tiefziehen, von Nachteil, daß die Bauteile oftmals zum einen außerhalb der vorgegebenen Toleranzen liegen und zum anderen in Biegungsbereichen Materialverzug, Materialausdünnungen, Einfallstellen und Glanzstellen aufweisen. Schließlich ist bei diesen Verfahren, wie zum Beispiel beim Schäumen, nachteilig, daß sich einerseits dünne Wandstärken fertigungstechnisch nicht, zumindest nur sehr schwer handhaben lassen und daß die erhaltenen Rohlinge andererseits in jedem Fall einer mechanischen Nacharbeit, wie Füllen, Schleifen oder Fräsen, bedürfen, um die vorgegebenen Toleranzen zu erreichen.

Ausgehend vom Stand der Technik liegt der Erfindung die Aufgabe zugrunde, ein Verfahren und eine Vorrichtung zur Verformung, insbesondere zum Biegen oder Abkanten, von im wesentlichen flächigen Gegenständen aus erweich- bzw. schmelzbarem Material, wie Metall, Kunststoff oder dergleichen, zur Verfügung zu stellen, mit dem bzw. der sich die obigen Nachteile verhindern und insbesondere auch kleinere oder kleine Stückzahlen mit einer hohen Maßgenauigkeit ausgesprochen wirtschaftlich herstellen lassen.

Diese Aufgabe wird in verfahrenstechnischer Hinsicht durch die Kombination der Merkmale des Anspruchs 1 gelöst.

So wird der zu verformende bzw. zu biegende bzw. abzukantende Gegenstand zunächst auf einer im wesentlichen ebenflächigen Auflage mit wenigstens zwei zueinander verschwenkbaren Auflageelementen positioniert und lösbar befestigt. Dann wird der Gegenstand in einem Bereich zwischen zwei Teilflächen des Gegenstandes, der im wesentlichen mit einem Bereich zwischen den beiden zueinander verschwenkbaren Auflageelementen der Auflage zusammenfällt, durch eine Heizeinrichtung erwärmt bzw. erweicht oder geschmolzen, die wenigstens eine im wesentlichen der Verschwenkachse der beiden Auflageelementen zugeordnete und in Längsrichtung der Verschwenkachse bewegbare Lasereinrichtung umfaßt. Anschließend wird eine der beiden Teilflächen des Gegenstandes durch Verschwenken des der einen der beiden Teilflächen zugeordneten Auflageelements gegenüber dem anderen der beiden Teilflächen des Gegenstandes und dem der anderen der beiden Teilflächen zugeordneten Auflageelement in eine Biegestellung verbracht. Zuletzt wird die eine der beiden Teilflächen des Gegenstandes von dem verschwenkten Auflageelement in der Biegestellung bis zur Abkühlung bzw. Verfestigung des Bereiches zwischen den beiden Teilflächen gehalten. Das erfindungsgemäße Verfahren zeichnet sich somit durch eine ausgesprochen hohe Wirtschaftlichkeit selbst bei kleinsten Stückzahlen aus. Des weiteren sind mit dem erfindungsgemäßen Verfahren sehr kurze Fertigungslaufzeiten sowie eine hohe Fertigungsgenauigkeit bei den hergestellten, d.h. verformten bzw. gebogenen Bauteilen sichergestellt. Insoweit eignet sich das erfindungsgemäße Verfahren ebensogut für die Einzelfertigung wie auch die serielle Fertigung. Das erfindungsgemäße Verfahren hat schließlich den großen Vorteil eines geringen Energieaufwandes.

Vorteilhafte verfahrenstechnische Maßnahmen sind in den Ansprüchen 2 bis 9 beschrieben.

Vorzugsweise wird der Gegenstand auf der Auflage von einer, insbesondere mechanisch, elektrisch, pneumatisch oder hydraulisch bewegbaren, Positioniereinrichtung in eine vorbestimmte Soll-Position gebracht. Die Positionierung des Gegenstandes auf der Auflage läßt sich auf diese Weise maschinell vornehmen, wodurch der Arbeitsaufwand und damit hohe Personalkosten bei der Herstellung eines Bauteiles wesentlich verringert werden.

Nach weiteren Maßnahmen der Erfindung wird der Gegenstand auf der Auflage mittels Laserstrahlung positioniert. Insbesondere wird eine Ist-Position des Gegenstandes auf der Auflage über eine CO₂-Lasereinrichtung, HeNe-Lasereinrichtung oder dergleichen Lasereinrichtung gemessen und einer Steuereinheit zum Vergleich mit der vorbestimmten Soll-Position zugeführt. Die Positionierung des jeweiligen Gegenstandes wird so schnell und präzise vorgenommen, wodurch die Maßhaltigkeit des hergestellten Gegenstandes zusätzlich verbessert wird.

Weiterhin liegt eine genaue Befestigung des Gegenstandes während der Verformung im Rahmen der Erfindung. So wird der Gegenstand bei Übereinstimmung der Ist-Position mit der Soll-Position auf die Auflage von einer Andruckeinrichtung, vorzugsweise von wenigstens einem Niederhalter, insbesondere von zwei Niederhaltern, angedrückt und festgelegt.

Zur schnellen und gezielten Wärmezufuhr wird der Gegenstand gemäß Anspruch 2 in dem Bereich zwischen den beiden Teilflächen durch die Lasereinrichtung von der Oberseite und/oder von der Unterseite der Auflage her erwärmt oder erweicht oder geschmolzen.

Von ganz besonderem Vorteil für das erfindungsgemäße Verfahren sind die Merkmale der Ansprüche 3 bis 6, wonach der Gegenstand in dem Bereich zwischen den beiden Teilflächen durch die Laserstrahlung, beispielsweise mittels einer CO₂-Lasereinrichtung, YAK-Lasereinrichtung oder dergleichen Lasereinrichtung, erwärmt bzw. erweicht oder geschmolzen wird. Diese Maßnahmen ziehen eine hohe Energieeinsparung aufgrund einer gezielt positionierbaren Wärmeentwicklung und einer gezielt zeitoptimierten, exakten Einstellmöglichkeit der Temperatur sowie punktuell vornehmbaren Wärmezufuhr nach sich. Gleichzeitig lassen sich auf diese Weise ausgesprochen präzisionsgenaue Gegenstände bzw. Bauteile zum Beispiel aus Platten oder dergleichen Material herstellen, und zwar mit definierten Radien von von bis zu 0,5 Millimeter, ohne Materialverzug auf der Verformungs- bzw. Biegeaußenkante, ohne Glanzstellen und ohne Einfallstellen.

Darüber hinaus sorgen die Merkmale nach den Ansprüchen 7 und 8, die Ist-Widerstandskraft in dem zu erwärmenden oder zu erweichenden bzw. zu schmelzenden Bereich zwischen den beiden Teilflächen des Gegenstandes vor dem Verbringen der einen der beiden Teilflächen in die Biegestellung, vorzugsweise mittels mindestens eines Drucksensors, zu messen und mit einer Soll-Widerstandskraft zu vergleichen, für die Bestimmung eines optimalen Verformungs- bzw. Biegungszustandes des Materials des zu erwärmenden oder erweichenden bzw. zu schmelzenden Gegenstandes.

Auf bevorzugte Weise erfolgt die Verformung bzw. Biegung des Gegenstandes automatisch durch Verschwenkung einer der beiden Teilflächen des Gegenstandes über ein dieser Teilfläche zugeordnetes Auflageelement der Auflage nach unten und/oder nach oben aus der Ebene der Auflage heraus in die Biegestellung. Die Verschwenkung ist dabei entsprechend den Merkmalen nach Anspruch 9 eng an den Vergleich von Ist-Widerstandskraft und Soll-Widerstandskraft gekoppelt, sodaß der mechanische Verformungs- bzw. Biegevorgang nur bei Freigabe in Abhängigkeit des Erwärmungs- oder Schmelzzustandes des Materials stattfinden kann.

Zur Erhöhung des Arbeitstaktes und gleichzeitigen Verbesserung der Präzision wird der Bereich zwischen den beiden Teilflächen des Gegenstandes nach dem Verbringen des einen der beiden Teilflächen in die Biegestellung mittels einer Abkühleinrichtung, vorteilhafterweise mittels eines Gebläses, einer Preßlufteinrichtung oder dergleichen, abgekühlt bzw. verfestigt.

Von großer Bedeutung ist auch die Tatsache, daß ein Ist-Winkel zwischen den beiden Teilflächen des Gegenstandes in der Biegestellung und/oder nach der Abkühlung bzw. Verfestigung des Bereiches zwischen den beiden Teilflächen über eine CO₂-Lasereinrichtung, HeNe-Lasereinrichtung oder dergleichen Lasereinrichtung gemessen und der Steuereinheit zum Vergleich mit einem vorbestimmten Soll-Winkel zugeführt wird. Hierdurch kann ständig die Winkligkeit des zu verformenden Gegenstandes zwischen zwei angrenzenden Teilflächen überwacht werden. Der Bereich kann somit bei Bedarf gegebenenfalls nacherwärmt und der Gegenstand weiter verformt bzw. abgekantet werden. Fertigungsungenauigkeiten sind insofern sicher vermieden.

Des weiteren wird diese Aufgabe in vorrichtungstechnischer Hinsicht durch die kennzeichnenden Maßnahmen des Anspruchs 10 gelöst.

Durch die erfindungsgemäße Ausbildung und Anordnung einer Auflage mit wenigstens zwei zueinander über eine Antriebseinrichtung verschwenkbaren Auflageelementen, einer Andruckeinrichtung zur lösbaren Befestigung des Gegenstandes auf der Auflage, einer Heizeinrichtung, die wenigstens eine im wesentlichen der Verschwenkachse der beiden Auflageelementen zugeordnete und in Längsrichtung der Verschwenkachse bewegbare Lasereinrichtung umfaßt, und einer Steuereinheit zur Steuerung und Koordination der Andruckeinrichtung, Heizeinrichtung und Antriebseinrichtung ist eine kompakte, betriebssichere und zugleich unabhängig von der jeweiligen Stückzahl wirtschaftlich arbeitende Vorrichtung zur Verformung, insbesondere zum Biegen, von im wesentlichen flächigen Gegenständen, wie Platten oder dergleichen, aus schmelzbarem Material, zum Beispiel aus Metall, Kunststoff etc., bereitgestellt. Durch die als Lasereinrichtung vorgesehene Heizeinrichtung läßt sich eine ganz gezielt einbringbare Wärmeentwicklung und Wärmezufuhr zur Erwärmung oder Erweichung oder Schmelzung des Gegenstandes in dem Bereich zwischen den beiden Teilflächen erreichen. Ebenso kann Wärme punktuell und zeitlich exakt zugeführt werden, sodaß das Material des Gegenstandes schonend behandelbar ist. Die erfindungsgemäße Vorrichtung zeichnet sich dabei auch besonders durch Eignung zu serieller Fertigung aus. Auch lassen sich mit der erfindungsgemäßen Vorrichtung Gegenstände ausgesprochen exakt fertigen, und zwar ohne daß Nacharbeiten oder dergleichen notwendig sind. Infolge der mit der erfindungsgemäßen Vorrichtung erzielbaren Automatisierung wird schließlich der Arbeitsaufwand und damit zusammenhängend die Personalkosten erheblich verringert. Zudem stellt die Steuereinheit, die alle fertigungsspezifischen Daten permanent erfaßt, aktualisiert, überwacht und gegebenenfalls korrigierend eingreift, ein Höchstmaß an Präzision der gefertigten Gegenstände und Bauteile sicher. Infolgedessen dient die Steuereinheit auch der Qualitätskontrolle jedes einzelnen Gegenstandes bzw. gefertigten Bauteils.

Vorteilhafte Ausgestaltungen der erfindungsgemäßen Vorrichtung sind in den Ansprüchen 11 bis 23 beschrieben.

Von außerordentlichem Interesse für eine ausgesprochen schnelle und äußerst präzise Erwärmung oder Erweichung bzw. Schmelzung des Gegenstandes im Bereich zwischen zwei zueinander zu verformenden Teilflächen und gleichzeitig für eine enorme Reduzierung des Energieverbrauchs sind die konstruktiven Maßnahmen der Ansprüche 11 bis 14.

Entsprechend Anspruch 11 ist vorzugsweise vorgesehen, daß die Heizeinrichtung, die zur Erwärmung bzw. Erweichung bzw. Schmelzung des Bereiches zwischen den beiden Teilflächen wenigstens eine Lasereinrichtung umfaßt, mit der Steuereinheit zum Erhalt und/oder zur Rückführung elektrischer Signale verbunden und von der Steuereinheit betätigbar ist. Auf diese Weise läßt von außen, d.h. durch entsprechende Programmierung oder Eingabe von seiten des Bedienungspersonals, eine ganz gezielt einbringbare Wärmeentwicklung und Wärmezufuhr zur Erwärmung bzw. Schmelzung des Gegenstandes in dem Bereich zwischen den beiden Teilflächen erreichen. Ebenso kann Wärme punktuell und zeitlich exakt zugeführt werden, sodaß das Material des Gegenstandes schonend behandelbar ist.

Vorteilhafterweise weist die Heizeinrichtung nach der Erfindung gemäß Anspruch 12 zwei Lasereinrichtungen auf, wobei eine der beiden Lasereinrichtungen oberhalb und eine der beiden Lasereinrichtungen unterhalb der Auflage angeordnet sind.

Darüber hinaus liegt es nach Anspruch 13 im Rahmen der Erfindung, die Lasereinrichtung als YAK-Lasereinrichtung, CO₂-Lasereinrichtung oder dergleichen Lasereinrichtung auszubilden.

Zudem ist es bevorzugt, daß die Lasereinrichtung gemäß der Merkmale nach Anspruch 14 entlang des Bereiches zwischen den beiden Teilflächen des Gegenstandes, der im wesentlichen der Verschwenkachse der beiden Auflageelementen zugeordnet ist, an einer Schiene oder dergleichen, beispielsweise an einer Andruckeinrichtung, insbesondere an einem Niederhalter, verfahrbar ist. Die erfindungsgemäße Vorrichtung erhält hierdurch zusätzlich einen kompakten Aufbau. Die gezielte Erwärmung oder Erweichung bzw. Schmelzung kann außerdem während einer Linearbewegung der Lasereinrichtung erfolgen.

Durch die erfindungsgemäße Ausgestaltung der Vorrichtung nach Anspruch 15, daß nämlich wenigstens einem der beiden Auflageelemente, vorzugsweise dem zu verschwenkenden Auflageelement, eine Druckmeßeinrichtung zum Messen der Widerstandskraft in dem zu erwärmenden bzw. zu schmelzenden Bereich zwischen den beiden Teilflächen des Gegenstandes zugeordnet ist, wird der Verformungszustand des Materials von dem zu erwärmenden bzw. zu schmelzenden Gegenstand im Bereich zwischen den beiden Teilflächen festgehalten.

Die Druckmeßeinrichtung, die dabei vorteilhafterweise mit der Steuereinheit verbunden ist, weist nach Anspruch 16 wenigstens einen Drucksensor auf, welcher in einem der beiden Auflageelemente versenkbar aufgenommen ist und einen in Richtung der Teilfläche des Gegenstandes federbelasteten Stift oder dergleichen als elektrischen Kontaktgeber umfaßt. Mit zunehmender Erwärmung wird der Drucksensor zunehmend entlastet. Bei Erreichen eines bestimmten Druckwertes, der in Abhängigkeit der Materialstärke, des zu erwärmenden bzw. zu schmelzenden Materials, wie beispielsweise Polystyren, ABS, Acryl, Makrolon, Impax etc. empirisch zuvor ermittelt ist, wird der Steuereinheit ein entsprechendes Signal zugeführt.

Nach einem weiteren Merkmal der Erfindung betätigt die mit der Antriebseinrichtung verbundene Steuereinheit sodann die Antriebseinrichtung zur Verschwenkung der Auflageelemente der Auflage zueinander. Der Verformungs- bzw. Biegevorgang findet somit automatisch, aber erst nach einer bestimmten Verformungsentstabilisierung statt.

Die Merkmale des Anspruchs 17, daß der Auflage eine, insbesondere mechanisch, elektrisch, pneumatisch oder hydraulisch betätigbare, und mit der Steuereinheit verbundene Positioniereinrichtung zum Verbringen des Gegenstandes in eine vorbestimmte Soll-Position zugeordnet ist, gewährleisten eine automatische, zudem schnelle und exakte Positionierung des jeweiligen Gegenstandes auf der Auflage. Konstruktiv läßt sich dies besonders vorteilhaft dadurch erreichen, daß die Positioniereinrichtung wenigstens einen Schieber oder dergleichen umfaßt, der im Randbereich der Auflage angeordnet und oberhalb der Auflage in den vom Randbereich aufgespannten Zentralbereich der Auflage hinein- bzw. aus diesem herausbewegbar ist.

Des weiteren liegt es gemäß Anspruch 18 im Rahmen der Erfindung, der Auflage eine CO₂-Lasereinrichtung, HeNe-Lasereinrichtung oder dergleichen Lasereinrichtung zur Messung einer Ist-Position des Gegenstandes auf der Auflage zuzuordnen, wobei die CO₂-Lasereinrichtung, HeNe-Lasereinrichtung oder dergleichen Lasereinrichtung mit der Steuereinheit zum Vergleich der Ist-Position des Gegenstandes auf der Auflage mit der vorbestimmten Soll-Position verbunden ist. Dies ermöglicht eine permanente Überprüfung der momentanen Position des jeweiligen Gegenstandes auf der Auflage und Überwachung der Länge, Parallelität etc. des Gegenstandes während der Verformung bzw. Biegung bzw. Abkantung. Dies wiederum fördert die Fertigungsgenauigkeit insgesamt.

Um den zu verformenden bzw. zu biegenden Gegenstand unabhängig von seiner Dicke auf der Auflage während der Verformung bzw. Biegung ausreichend, dennoch lösbar zu befestigen, ist die Andruckeinrichtung zur lösbaren Befestigung des Gegenstandes auf der Auflage nach Anspruch 19 oberhalb der Auflage vertikal bewegbar angeordnet und mit der Steuereinheit zum Empfang und/oder zur Rückführung elektrischer Signale verbunden sowie von der Steuereinheit betätigbar.

In weiterer Ausgestaltung der Erfindung ist als Andruckeinrichtung entsprechend Anspruch 20 wenigstens ein, vorzugsweise sich längs des Bereiches zwischen den beiden Teilflächen erstreckender und zu dem Bereich seitlich geringfügig beabstandet angeordneter Niederhalter vorgesehen. Für eine noch stabilere Halterung sind insbesondere zwei oder mehrere Niederhalter von Vorteil, wobei jeder Niederhalter einer der Auflageelemente der Auflage zugeordnet ist. Der bzw. die Niederhalter ist bzw. sind in diesem Zusammenhang vorzugsweise mit der Oberfläche des Gegenstandes linienförmig und/oder punktförmig in Kontakt bringbar.

Von besonderem Interesse für eine vielseitige Einsatzmöglichkeit der erfindungsgemäßen Vorrichtung sind die Maßnahmen nach Anspruch 21, wonach die Auflageelemente der Auflage miteinander derart verbunden sind, daß wenigstens eines der beiden Auflageelemente nach unten und/oder nach oben aus der Ebene der Auflage heraus in eine Biegestellung verschwenkbar ist. Hierdurch ist sichergestellt, daß die Auflageelemente der Auflage zueinander zwischen -180° und 180° verschwenkt werden und damit jeweils zwei benachbarte Teilflächen des Gegenstandes einen Winkel zwischen 0° und 360° einschließen können.

Es ist entsprechend Anspruch 22 weiter vorteilhaft, wenn der Auflage im Bereich der Verschwenkachse der beiden Auflageelemente eine Abkühleinrichtung zur raschen Abkühlung bzw. Verfestigung des erwärmten oder erweichten bzw. geschmolzenen Bereiches zugeordnet ist und die Abkühleinrichtung ein Gebläse, eine Preßlufteinrichtung oder dergleichen umfaßt.

Zudem ist es nach Anspruch 23 erfindungsgemäß vorgesehen, der Auflage eine CO₂-Lasereinrichtung, HeNe-Lasereinrichtung oder dergleichen Lasereinrichtung zur Messung eines Ist-Winkels zwischen den beiden Teilflächen des Gegenstandes in der Biegestellung und/oder nach der Abkühlung bzw. Verfestigung des Bereiches zwischen den beiden Teilflächen zuzuordnen, die mit der Steuereinheit zum Vergleich des Ist-Winkels mit einem vorbestimmten Soll-Winkel verbunden ist. Auf diese Weise lassen sich die Winkligkeit der beiden Teilflächen des Gegenstandes zueinander genau bestimmen und gegebenenfalls durch erneute Erweichung bzw. Schmelzung des Bereiches zwischen den beiden Teilflächen korrigieren. Die Folge hiervon ist ein Gegenstand mit ausgesprochen hoher Maßhaltigkeit.

Schließlich liegt es zur weiteren Automatisierung noch im Rahmen der Erfindung, daß der Auflage Transporteinrichtungen zum Antransport des Gegenstandes von einer vorhergehenden Bearbeitungsstation bzw. zum Abtransport des Gegenstandes zu einer nachfolgenden Bearbeitungsstation vor- und/oder nachgeordnet sind. Daß die Andruckeinrichtung, die Heizeinrichtung und die beiden Auflageelemente des Auflage letztlich senkrecht zur Richtung des Antransportes bzw. Abtransportes angeordnet sind, erhöht den Arbeitstakt zusätzlich.

Weitere Merkmale, Vorteile und Einzelheiten der Erfindung ergeben sich aus der nachfolgenden Beschreibung einiger bevorzugter Ausführungsformen der Erfindung sowie anhand der Zeichnung. Hierbei zeigen:
- Fig. 1: eine schematische, perspektivische Ansicht einer Ausführungsform einer erfindungsgemäßen Vorrichtung;
- Fig. 2: eine Draufsicht auf eine andere Ausführungsform einer erfindungsgemäßen Vorrichtung;
- Fig. 3: eine teilweise abgebrochene Seitenansicht auf die erfindungsgemäße Vorrichtung gemäß Pfeil III in Fig. 2;
- Fig. 4: einen teilweise abgebrochenen Horizontalschnitt durch die erfindungsgemäße Vorrichtung gemäß Linie IV-IV in Fig. 4;
- Fig. 5: einen teilweise abgebrochenen Vertikalschnitt durch die erfindungsgemäße Vorrichtung mit einem Drucksensor in Kontaktstellung gemäß Linie V-V in Fig. 2;
- Fig. 6: einen teilweise abgebrochenen Vertikalschnitt durch die erfindungsgemäße Vorrichtung mit einem Drucksensor in Außerkontaktstellung gemäß Linie V-V in Fig. 2;
- Fig. 7: eine schematische, perspektivische Ansicht auf eine Ausführungsform der erfindungsgemäßen Vorrichtung mit einem zu verformenden bzw. zu biegenden Gegenstand in einem ersten Verfahrensschritt;
- Fig. 8: eine schematische, perspektivische Ansicht auf eine Ausführungsform der erfindungsgemäßen Vorrichtung mit einem zu verformenden bzw. zu biegenden Gegenstand in einem zu Fig. 7 nachfolgenden Verfahrensschritt;
- Fig. 9: eine schematische, perspektivische Ansicht auf eine Ausführungsform der erfindungsgemäßen Vorrichtung mit einem zu verformenden bzw. zu biegenden Gegenstand in einem zu Fig. 8 nachfolgenden Verfahrensschritt;
- Fig. 10: eine schematische, perspektivische Ansicht auf eine Ausführungsform der erfindungsgemäßen Vorrichtung mit einem zu verformenden bzw. zu biegenden Gegenstand in einem zu Fig. 9 nachfolgenden Verfahrensschritt;
- Fig. 11: eine schematische, perspektivische Ansicht auf eine Ausführungsform der erfindungsgemäßen Vorrichtung mit einem zu verformenden bzw. zu biegenden Gegenstand in einem zu Fig. 10 nachfolgenden Verfahrensschritt; und
- Fig. 12: eine schematische, perspektivische Ansicht auf eine Ausführungsform der erfindungsgemäßen Vorrichtung mit einem zu verformenden bzw. zu biegenden Gegenstand in einem zu Fig. 11 nachfolgenden Verfahrensschritt.

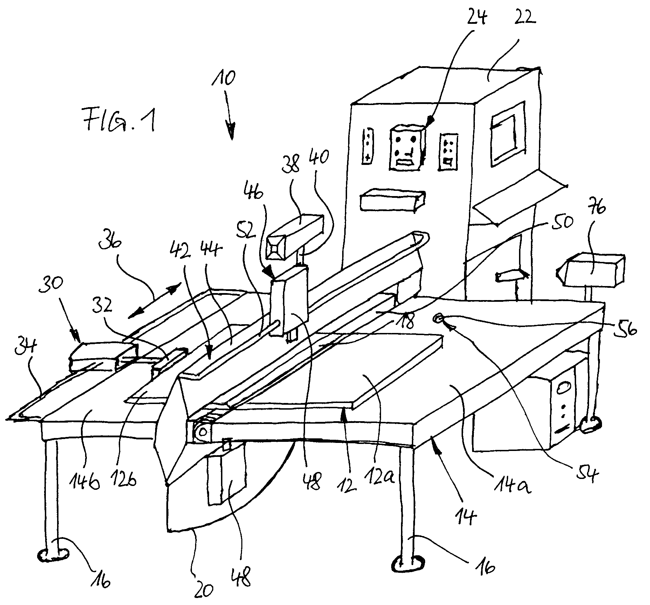

In Fig. 1 ist eine erste Ausführungsform einer erfindungsgemäßen Vorrichtung 10 zur Verformung, insbesondere zum Biegen, von im wesentlichen flächigen Gegenständen 12, wie Platten oder dergleichen, aus erwärmbaren bzw. schmelzbarem Material gezeigt. Bei dem erwärmbaren bzw. schmelzbarem Material kann es sich um Metall oder auch Kunststoff, wie zum Beispiel um ein Polymer und einen Thermoplasten, insbesondere um Polystyren, ABS, Acryl, Makrolon und Impax etc., mit oder ohne einer Verstärkung aus Glasfaser, Kohlefaser usw. handeln.

Die in Fig. 1 dargestellte Vorrichtung 10 umfaßt eine im wesentlichen ebenflächige Auflage 14 zur Abstützung des zu biegenden Gegenstandes 12. Die Auflage 14 besteht beispielhaft aus einer Marmorplatte oder dergleichen, die an einem Gestell 16 aus Stahl etc. aufgehängt ist. Die Auflage 14 ist dabei aus zwei Auflageelementen 14a, 14b gebildet, die zur Verformung bzw. zum Biegen des Gegenstandes 12 in einem Bereich 18 zwischen zwei Teilflächen 12a, 12b des Gegenstandes 12 zueinander verschwenkbar sind. Zur Verschwenkung der beiden Auflageelemente 14a, 14b der Auflage 14 ist eine Antriebseinrichtung 20 vorgesehen, die mit einer in einem Steuerschrank 22 untergebrachten Steuereinheit 24 zur Entgegennahme und/oder Rückführung elektrischer Signale verbunden und von der Steuereinheit 24 betätigbar ist. Die Auflageelemente 14a, 14b der Auflage 14 sind dabei miteinander derart verbunden, daß wenigstens eines der beiden Auflageelemente 14a nach unten und/oder nach oben aus der Ebene der Auflage 14 heraus in eine Biegestellung verschwenkbar ist. Wie in den Fig. 3 und 4 dargestellt, sind die beiden Auflageelemente 14a, 14b über zwei im Randbereich der Auflage 14 angeordnete Scharniere 26 oder dergleichen mit einem Drehbolzen 28 miteinander verbunden.

Weiterhin ist der Auflage 14 eine, insbesondere mechanisch, elektrisch, pneumatisch oder hydraulisch betätigbare, Positioniereinrichtung 30 zum Verbringen des Gegenstandes 12 in eine vorbestimmte Soll-Position zugeordnet. Die Positioniereinrichtung 30 ist ebenfalls mit der Steuereinheit 24 zur Entgegennahme und/oder Rückführung elektrischer Signale verbunden und von der Steuereinheit 24 betätigbar.

Gemäß Fig. 1 umfaßt die Positioniereinrichtung 30 wenigstens einen Schieber 32 oder dergleichen, der im Randbereich der Auflage 14 angeordnet und oberhalb der Auflage 14 in den vom Randbereich aufgespannten Zentralbereich der Auflage 14 hinein- bzw. aus diesem herausbewegbar ist. Der Schieber 32 ist hier von einer quer zur Auflage 14 verlaufenden Schiene 34 oder dergleichen aufgenommen, um über eine nicht näher gezeigte Antriebseinrichtung entsprechend der jeweiligen Größe des Gegenstandes 12 in Richtung des Doppelpfeiles 36 quer zur Auflage 14 bewegt bzw. verfahren werden zu können.

Des weiteren ist die Vorrichtung 10 mit einer CO₂-Lasereinrichtung, HeNe-Lasereinrichtung oder dergleichen Lasereinrichtung 38 zur Messung einer Ist-Position des Gegenstandes 12 auf der Auflage 14 ausgestattet. Die der Auflage 14 zugeordnete CO₂-Lasereinrichtung, HeNe-Lasereinrichtung oder dergleichen Lasereinrichtung 38 ist zum Beispiel seitlich der Auflage 14 von einem Träger 40 aufgenommen, der an dem Gestell 16 befestigt ist. Um die Ist-Position des Gegenstandes 12 auf der Auflage 14 mit einer vorbestimmten Soll-Position zu vergleichen, ist die CO₂-Lasereinrichtung, HeNe-Lasereinrichtung oder dergleichen Lasereinrichtung 38 auch mit der Steuereinheit 24 zur Übertragung bzw. Weitergabe von elektrischen Signalen verbunden.

Die Vorrichtung 10 entsprechend Fig. 1 weist darüber hinaus eine Andruckeinrichtung 42 oder dergleichen zur lösbaren Befestigung des Gegenstandes 12 auf der Auflage 14 auf, die oberhalb der Auflage 14 vertikal bewegbar angeordnet ist. Auf diese Weise können Gegenstände 12 verschiedener Dicke an der Auflage 14 festgelegt werden. Die Andruckeinrichtung 42 steht mit der Steuereinheit 24 zur Entgegennahme und/oder Rückführung elektrischer Signale in Verbindung und ist von der Steuereinheit 24 betätigbar.

Die Andruckeinrichtung 42 umfaßt wenigstens einen Niederhalter 44, der sich vorzugsweise längs des Bereiches 18 zwischen den beiden Teilflächen 12a, 12b erstreckt und zu dem Bereich 18 seitlich geringfügig beabstandet ist. Insofern kann der Niederhalter 44 den Gegenstand 12 unmittelbar neben dem Bereich 18 zwischen den beiden Teilflächen 12a, 12b, welcher einer späteren Biegekante entspricht, mit Druck beaufschlagen. Einem außerhalb vorgegebener Toleranzen bzw. einem torsionsähnlichen Biegen ist somit sicher entgegengewirkt. In diesem Zusammenhang kann der Niederhalter 44 mit der Oberfläche des Gegenstandes 12 gleichermaßen linienförmig und/oder punktförmig in Kontakt gebracht sein.

Um beide Teilflächen 12a, 12b des Gegenstandes 12 an den korrespondierenden Auflageelementen 14a, 14b der Auflage 14 festzulegen, kann die Andruckeinrichtung 42 vorteilhafterweise zwei sich längs des Bereiches 18 zwischen den beiden Teilflächen 12a, 12b erstreckende und zu dem Bereich 18 jeweils seitlich geringfügig beabstandet sowie einander gegenüberliegend angeordnete Niederhalter 44 (nicht dargestellt) umfassen, wobei jeder Niederhalter 44 einer der beiden Auflageelemente 14a, 14b der Auflage 14 zugeordnet ist.

Die Vorrichtung 10 weist zudem eine Heizeinrichtung 46 zur Erwärmung bzw. Schmelzung des Bereiches 18 zwischen den beiden Teilflächen 12a, 12b des Gegenstandes 12 auf, wobei der Bereich 18 im wesentlichen der Verschwenkachse der beiden Auflageelementen 14a, 14b zugeordnet ist. Die Heizeinrichtung 46 zur Erwärmung bzw. Schmelzung des Bereiches 18 zwischen den beiden Teilflächen 12a, 12b umfaßt wenigstens eine Lasereinrichtung 48. Die Lasereinrichtung 48 ist mit der Steuereinheit 24 zur Entgegennahme und/oder Rückführung elektrischer Signale verbunden und von der Steuereinheit 24 betätigbar ist.

Wie Fig. 1 deutlich zu entnehmen ist, besteht die Heizeinrichtung 46 bei dieser Ausführungsform der Vorrichtung 10 aus zwei Lasereinrichtungen 48, wobei eine der beiden Lasereinrichtungen 48 oberhalb und eine der beiden Lasereinrichtungen 48 unterhalb der Auflage 14 angeordnet ist. Dies hat den Vorteil, daß das zu erwärmende bzw. zu schmelzende Material des Gegenstandes 12 bei Bedarf gleichzeitig von dessen Oberseite wie auch dessen Unterseite von der Heizeinrichtung 46 mit Wärme beaufschlagt werden kann.

Durch die Ausbildung des Scharniers 26, über welches die beiden Auflageelemente 14a, 14b der Auflage 14 miteinander gelenkig verbunden sind, sind die beiden Auflageelemente 14a, 14b geringfügig auf Abstand gehalten. Die beiden Auflageelemente 14a, 14b sind insofern durch einen Spalt 50, der mit deren Verschwenkachse bzw. auch mit dem Bereich 18 zwischen den beiden Teilflächen 12a, 12b des Gegenstandes 12 zusammenfällt, voneinander getrennt.

Die Lasereinrichtung 48 selbst ist als YAK-Lasereinrichtung, CO₂-Lasereinrichtung oder dergleichen Lasereinrichtung ausgebildet. Entsprechend Fig. 1 ist die Lasereinrichtung 48 entlang des Bereiches 18 zwischen den beiden Teilflächen 12a, 12b des Gegenstandes 12, der im wesentlichen der Verschwenkachse der beiden Auflageelementen 14a, 14b zugeordnet ist, in Längsrichtung der Verschwenkachse von einer Schiene 52 oder dergleichen verfahrbar aufgenommen. Vorzugsweise ist die Lasereinrichtung 48 über die Schiene 52 oder dergleichen an der Andruckeinrichtung 42, insbesondere an dem Niederhalter 44, entlang dieser bzw. diesem verfahrbar angeordnet, wodurch die Vorrichtung 10 zusätzlich konstruktiv kompakt ausgestaltet ist.

Die Vorrichtung 10 ist nach Fig. 1 zudem mit einer Druckmeßeinrichtung 54 zum Messen der Widerstandskraft in dem zu erwärmenden bzw. zu schmelzenden Bereich 18 zwischen den beiden Teilflächen 12a, 12b des Gegenstandes 12 versehen, die wenigstens einem der beiden Auflageelemente 14a, 14b, vorzugsweise dem zu verschwenkenden Auflageelement 14a, zugeordnet ist. Auch die Druckmeßeinrichtung 54 ist zur Weiterleitung elektrischer Signale mit der Steuereinheit 24 verbunden.

Die Druckmeßeinrichtung 54 nach Fig. 1 weist wenigstens einen Drucksensor 56 - hier drei Drucksensoren 56 - auf, die jeweils in dem einen Auflageelement 14a versenkbar aufgenommen sind und einen in Richtung der Teilfläche 12a des Gegenstandes 12 federbelasteten Stift 58 oder dergleichen als elektrischen Kontaktgeber umfassen.

Nach Fig. 5 befindet sich der metallische Stift 58, der über sein eines Ende mit der Unterseite der einen Teilfläche 12a des Gegenstandes 12 in Berührung steht und von dem Gegenstand 12 in eine Ausnehmung 60 gedrückt wird, mit seinem anderen Ende in Kontakt mit einer elektrischen Kontaktschiene 62 oder dergleichen. Die elektrische Kontaktschiene wiederum führt zur Steuereinheit 24. Eine Druckfeder 64, die zwischen einem Umfangsring 66 des Stiftes 58 und einem Isoliergummi 68 angeordnet ist, beaufschlagt die Teilfläche 12a permanent.

Mit zunehmender Erwärmung des Bereiches 18 zwischen den beiden Teilflächen 12a, 12b des Gegenstandes 12 hebt die Teilfläche 12a infolge der Druckfeder 64 gemäß Pfeil 70 immer mehr ab, bis der Stift 58 des Drucksensors 56 schließlich entsprechend Fig. 6 bei erreichter Verformungsentstabilisierung von der Kontaktschiene 62 getrennt ist.

In alternativer, jedoch nicht näher erläuterten Ausgestaltung kann auch eine Druckmeßeinrichtung mit Drucksensoren verwendet werden, die den Verschiebeweg des Stiftes 58 als umgesetztes elektrisches Signal der Steuereinheit 24 zuführen, die das erhaltene Signal sodann weiterverarbeitet. Enenso ist es denkbar, den von dem oder den Drucksensoren aufgebrachten Druck zu messen und der Steuereinheit zuzuführen, die den erhaltenen Wert sodann mit einem vorgegebenen Druckwert vergleicht und zuletzt mit der Antriebseinrichtung 20 zur Verschwenkung der Auflageelemente 14a, 14b der Auflage 14 auszulösen.

Der Auflage 14 von der Vorrichtung 10 ist, wie des weiteren in der Fig. 10 gezeigt, im Bereich der Verschwenkachse der beiden Auflageelemente 14a, 14b der Auflage 14 eine Abkühleinrichtung 72 zur Abkühlung bzw. Verfestigung des erwärmten bzw. geschmolzenen Bereiches 18 zwischen den beiden Teilflächen 12a, 12b des Gegenstandes 12 zugeordnet. Die Abkühleinrichtung 72 ist dabei von einem Gebläse 74, einer Preßlufteinrichtung oder dergleichen gebildet.

Der in Fig. 1 dargestellten Auflage 14 ist schließlich noch eine CO₂-Lasereinrichtung, HeNe-Lasereinrichtung oder dergleichen Lasereinrichtung 76 zur Messung eines Ist-Winkels zwischen den beiden Teilflächen 12a, 12b des Gegenstandes 12 in der Biegestellung und/oder nach der Abkühlung bzw. Verfestigung des Bereiches 18 zwischen den beiden Teilflächen 12a, 12b zugeordnet. Die CO₂-Lasereinrichtung, HeNe-Lasereinrichtung oder dergleichen Lasereinrichtung 76 zur Messung des Ist-Winkels ist in diesem Zusammenhang mit der Steuereinheit 24 zum Vergleich des Ist-Winkels mit einem vorbestimmten Soll-Winkel verbunden, der elektrische Signale von der CO₂-Lasereinrichtung, HeNe-Lasereinrichtung oder dergleichen Lasereinrichtung 74 zugetragen werden.

Die Steuereinheit 24 übernimmt somit die gesamte Steuerung der Andruckeinrichtung 42, der Heizeinrichtung 46, der Antriebseinrichtung 20 sowie der Positioniereinrichtung 30 unter Zuhilfenahme der CO₂-Lasereinrichtung, HeNe-Lasereinrichtung oder dergleichen Lasereinrichtungen 38, 76.

Von weiterem Vorteil für eine vollständige Automation sind der Auflage 14 nicht gezeigte Transporteinrichtungen zum Antransport des Gegenstandes 12 von einer vorhergehenden Bearbeitungsstation bzw. zum Abtransport des Gegenstandes 12 zu einen nachfolgenden Bearbeitungsstation beispielsweise in Form von Gurtförderbändern oder ähnlichem vor- und/oder nachgeordnet. Für eine vereinfachte Verformung bzw. Biegung und Zulieferung bzw. Weiterbeförderung des Gegenstandes 12 sind die Andruckeinrichtung 42, die Heizeinrichtung 46 und die beiden Auflageelemente 14a, 14b der Auflage 14 senkrecht zur Richtung des Antransportes bzw. Abtransportes angeordnet.

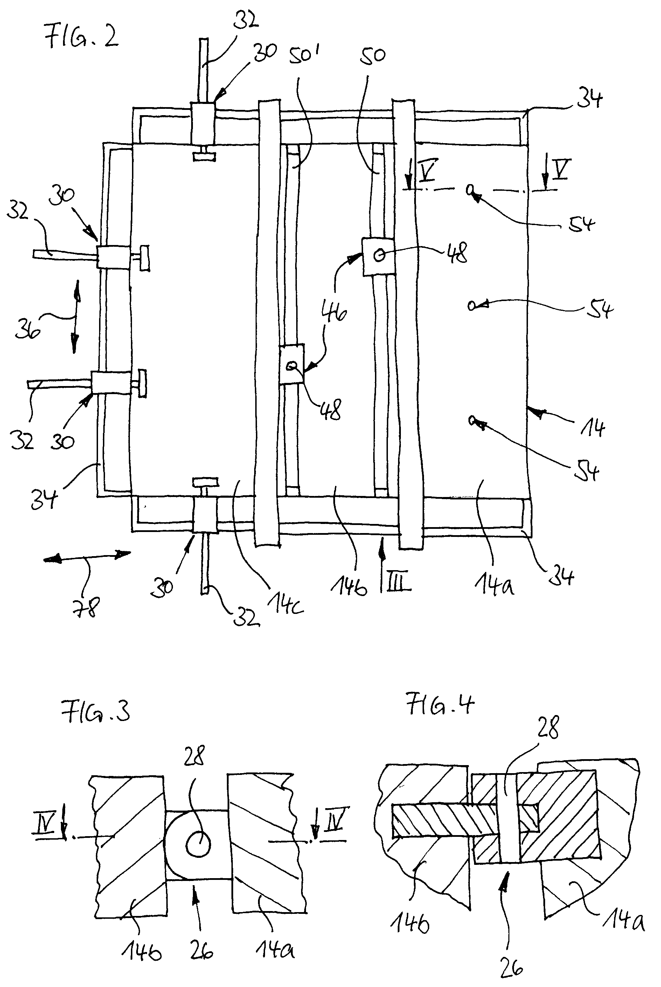

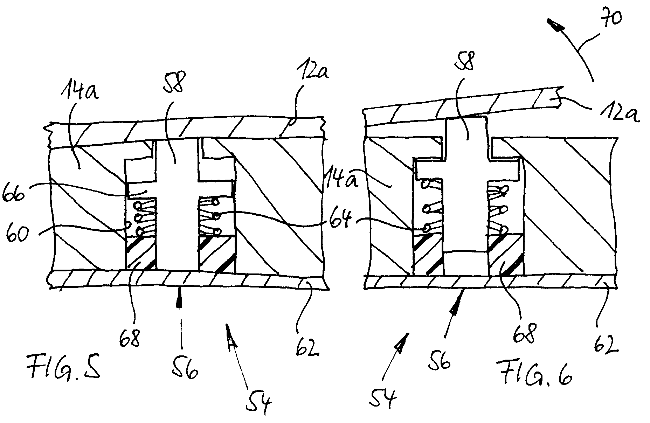

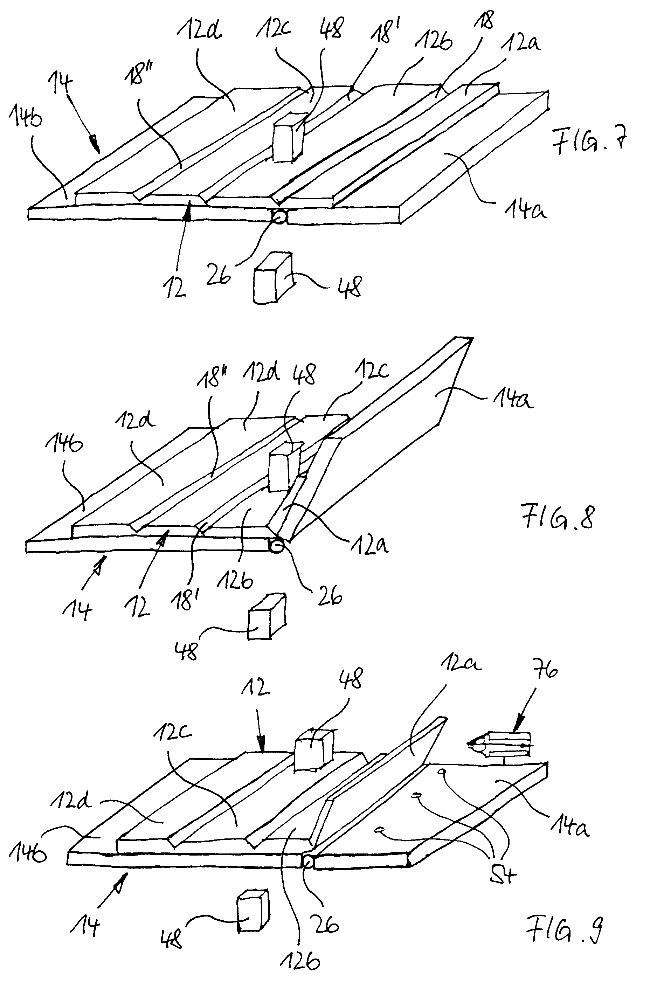

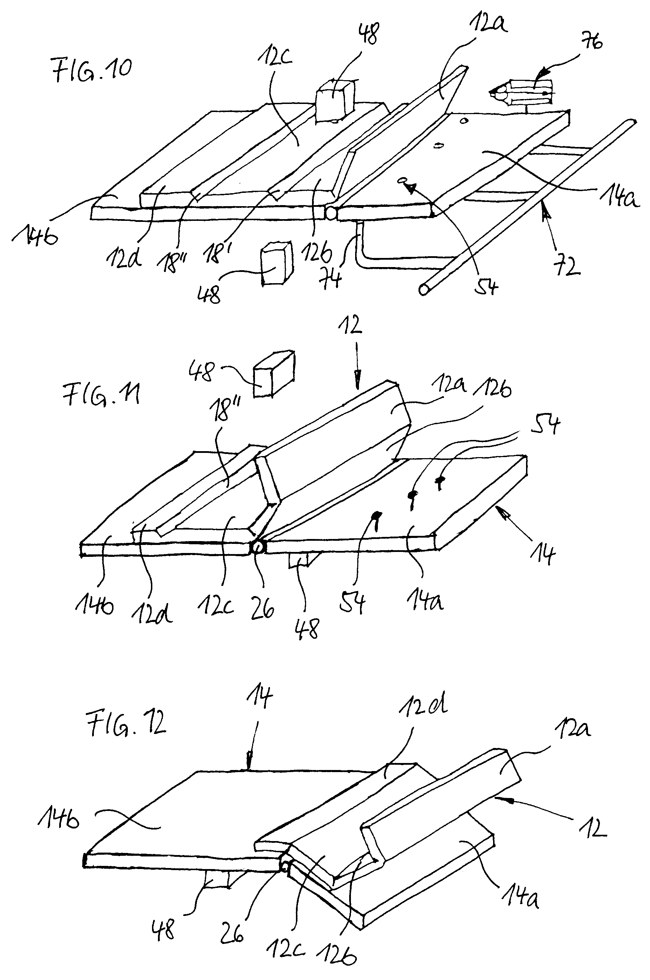

Die zweite Ausführungsform einer erfindungsgemäßen Vorrichtung 10 nach Fig. 2 unterscheidet sich von derjenigen gemäß Fig. 1 im wesentlichen nur in der Anzahl der Auflageelemente 14a, 14b, 14c der Auflage 14, sodaß mehrere, d.h. hier zwei, Verformungs- bzw. Biegungsvorgänge zu gleicher Zeit durchgeführt werden können. Daher ist die Andruckeinrichtung 42 mit zwei sich längs der Bereiche 18, 18' zwischen den jeweiligen Teilflächen 12a, 12b, 12c des nicht dargestellten Gegenstandes 12 erstreckenden und zu den Bereichen 18, 18' seitlich geringfügig beabstandet angeordneten Niederhaltern 44 versehen, wobei jeder Niederhalter 44 einem der Auflageelemente 14a, 14c der Auflage 14 zugeordnet ist. Die Bereiche 18, 18' fallen dabei mit den Spalten 50, 50' zwischen den Auflageelementen 14a, 14b, 14c zusammen. An jedem der beiden Niederhalter 44 der Andruckeinrichtung 42 ist jeweils eine Heizeinrichtung 46 mit einer Lasereinrichtung 48 querverschieblich in Richtung des Doppelpfeiles 36 angeordnet.

Letztlich unterscheidet sich die zweite Ausführungsform einer erfindungsgemäßen Vorrichtung 10 nach Fig. 2 von derjenigen gemäß Fig. 1 auch durch die Positioniereinrichtung 30, die aus einer Reihe zusammenwirkender Schieber 32 gebildet ist, die von in den Randbereichen der Auflage 14 vorgesehenen Schienen 34 sowohl quer in Richtung des Doppelpfeiles 36 als auch längs in Richtung des Doppelpfeiles 78 über eine nicht gezeigte Antriebseinrichtung verschoben werden können. Im übrigen sind die beiden Ausführungsformen der erfindungsgemäßen Vorrichtungen 10 nach den Fig.1 und 2 identisch.

Im folgenden wird das Verfahren zur Verformung, insbesondere zum Biegen, von im wesentlichen flächigen Gegenständen, wie Platten oder dergleichen, aus erwärmbarem bzw. schmelzbarem Material anhand der Fig. 7 bis 12 beschrieben:

Der Gegenstand 12 wird gemäß Fig. 7 zunächst zu einer im wesentlichen ebenflächigen Auflage 14 mit wenigstens zwei zueinander verschwenkbaren Auflageelementen 14a, 14b mittels einer nicht gezeigten Transporteinrichtung heranbefördert und auf der Auflage 14 positioniert. Zu diesem Zweck wird der Gegenstand 12 auf der Auflage 14 von einer, insbesondere mechanisch, elektrisch, pneumatisch oder hydraulisch bewegbaren, Positioniereinrichtung 30 (vgl. Fig. 1) in eine vorbestimmte Soll-Position gebracht und mittels Laserstrahlung positioniert, wobei die momentane Ist-Position des Gegenstandes 12 über eine CO₂-Lasereinrichtung, HeNe-Lasereinrichtung oder dergleichen Lasereinrichtung 38 gemessen, einer Steuereinheit 24 zum Vergleich mit der vorbestimmten Soll-Position zugeführt und gegebenenfalls durch die Positioniereinrichtung 30 korrigiert wird.

Bei Übereinstimmung der Ist-Position des Gegenstandes 12 mit der Soll-Position wird der Gegenstand 12 sodann auf die Auflage 14 von einer Andruckeinrichtung 42 (vgl. Fig. 1) angedrückt und somit lösbar festgelegt, und zwar bevorzugt seitlich geringfügig beabstandet zu einem Bereich 18 zwischen zwei Teilflächen 12a, 12b des Gegenstandes 12, der mit einer Versc hwenkachse zwischen den beiden Auflageelementen 14a, 14b der Auflage 14 bzw. einem dazwischen vorhandenen Spalt 50 zusammenfällt.

Hieraufhin wird der Gegenstand 12 in dem Bereich 18 zwischen den beiden Teilflächen 12a, 12b des Gegenstandes 12, der im wesentlichen mit einem Spalt 50 zwischen den beiden zueinander verschwenkbaren Auflageelementen 14a, 14b der Auflage 14 zusammenfällt, erwärmt bzw. geschmolzen. Dies erfolgt, wie in Fig. 1 schematisch angedeutet, sowohl von der Oberseite als auch von der Unterseite der Auflage 14 durch Laserstrahlung. Die Laserstrahlung wird von einer entlang des zu erwärmenden bzw. zu schmelzenden Bereiches 18 zwischen den beiden Teilflächen 12a, 12b vorzugsweise kontinuierlich bewegten CO₂-Lasereinrichtung, YAK-Lasereinrichtung oder dergleichen Lasereinrichtung 48 erzeugt. Der Laserstrahl der CO₂-Lasereinrichtung, YAK-Lasereinrichtung oder dergleichen Lasereinrichtung 48 wird an die, insbesondere verringerte, Dicke des Gegenstandes 12 in dem zu erwärmenden bzw. zu schmelzenden Bereich 18 zwischen den beiden Teilflächen 12a, 12b und/oder die Breite des Bereiches 18 durch entsprechende Fokussierung angepaßt.

Gleichzeitig wird die Widerstandskraft in dem zu erwärmenden bzw. zu schmelzenden Bereich 18 zwischen den beiden Teilflächen 12a, 12b des Gegenstandes 12 durch Drucksensoren 56 (vgl. Fig. 1) oder dergleichen Druckmeßeinrichtung 54 gemessen, die an dem der einen der beiden Teilflächen 12a zugeordneten Auflageelement 14a angeordnet sind. Die momentane Ist-Widerstandskraft wird der Steuereinheit 24 zum Vergleich mit einer vorbestimmten Soll-Widerstandskraft zugeführt.

Bei Übereinstimmung der Ist-Widerstandskraft mit der Soll-Widerstandskraft wird das eine Auflageelement 14a von einer diesem zugeordneten, mit der Steuereinheit 24 verbundenen Antriebseinrichtung 20 (vgl. Fig. 1) nach oben aus der Ebene der Auflage 14 heraus in eine Biegestellung verschwenkt. Entsprechend Fig. 8 wird die eine der beiden Teilflächen 12a des Gegenstandes 12 durch Verschwenken des der einen der beiden Teilflächen 12a zugeordneten Auflageelementes 14a gegenüber dem anderen der beiden Teilflächen 12b des Gegenstandes 12 und dem der anderen der beiden Teilflächen 12b zugeordneten Auflageelement 14b in die Biegestellung verbracht. Die eine der beiden Teilflächen 12a des Gegenstandes 12 wird schließlich von dem verschwenkten Auflageelement 14a in der Biegestellung bis zur Abkühlung bzw. Verfestigung des Bereiches 18 zwischen den beiden Teilflächen 12a, 12b gehalten.

Nach Fig. 9 wird ein Ist-Winkel zwischen den beiden Teilflächen 12a, 12b des Gegenstandes 12 in der Biegestellung über eine CO₂-Lasereinrichtung, HeNe-Lasereinrichtung oder dergleichen Lasereinrichtung 76 gemessen und der Steuereinheit 24 zum Vergleich mit einem vorbestimmten Soll-Winkel zugeführt.

Stimmen Ist-Winkel und Soll-Winkel überein, wird der Bereich 18 zwischen den beiden Teilflächen 12a, 12b des Gegenstandes 12 nach dem Verbringen des einen der beiden Teilflächen 12a in die Biegestellung entsprechend Fig. 10 mittels einer Abkühleinrichtung 72 in Form eines Gebläses 74, einer Preßlufteinrichtung oder dergleichen abgekühlt bzw. verfestigt.

Gegebenenfalls wird der Ist-Winkel zwischen den beiden Teilflächen 12a, 12b des Gegenstandes 12 nach der Abkühlung bzw. Verfestigung des Bereiches zwischen den beiden Teilflächen 12a, 12b nochmals gemäß Fig. 9 über die CO₂-Lasereinrichtung, HeNe-Lasereinrichtung oder dergleichen Lasereinrichtung 76 gemessen und der Steuereinheit 24 zum Vergleich mit einem vorbestimmten Soll-Winkel zugeführt.

Stimmen Ist-Winkel und Soll-Winkel nicht überein, wird der Bereich 18 zwischen den beiden Teilflächen 12a, 12b des Gegenstandes 12 abermals erwärmt bzw. geschmolzen und die eine der beiden Teilflächen 12a in die Biegestellung gemäß Fig. 8 verbracht.

Entsprechend Fig. 11 wiederholt sich der Verformungs- bzw. Biegungsvorgang zwischen den Teilflächen 12b, 12c des Gegenstandes 12 hinsichtlich des Bereiches 18' in gleicher Weise.

Nach Fig. 12 wiederholt sich der Verformungs- bzw. Biegungsvorgang zwischen den Teilflächen 12c, 12d des Gegenstandes 12 hinsichtlich des Bereiches 18'', wobei die eine der beiden Teilflächen 12c des Gegenstandes 12 von dem der einen der beiden Teilflächen 12c zugeordneten Auflageelement 14a nach unten aus der Ebene der Auflage 14 heraus in die Biegestellung verschwenkt wird.

Der verformte Gegenstand 12 wird schließlich über eine nicht dargestellte Transporteinrichtung zu einer nächsten Bearbeitungsstation weiterbefördert.

Sämtliche in den Anmeldungsunterlagen offenbarten Merkmale werden als erfindungswesentlich beansprucht, soweit sie einzeln oder in Kombination gegenüber dem Stand der Technik neu sind.

## Patentansprüche

1. Verfahren zur Verformung, insbesondere zum Biegen, von im wesentlichen flächigen Gegenständen (12), wie Platten oder dergleichen, aus erweich- bzw. schmelzbarem Material, wobei der Gegenstand (12) zunächst auf einer im wesentlichen ebenflächigen Auflage (14) mit wenigstens zwei zueinander verschwenkbaren Auflageelementen (14a, 14b) positioniert und lösbar befestigt wird,
der Gegenstand (12) sodann in einem Bereich (18) zwischen zwei Teilflächen (12a, 12b) des Gegenstandes (12), der im wesentlichen mit einem Bereich (18) zwischen den beiden zueinander verschwenkbaren Auflageelementen (14a, 14b) der Auflage (14) zusammenfällt, durch eine Heizeinrichtung (46) erweicht bzw. geschmolzen wird, die wenigstens eine im wesentlichen der Verschwenkachse der beiden Auflageelementen (14a, 14b) zugeordnete und in Längsrichtung der Verschwenkachse bewegbare Lasereinrichtung (48) umfaßt,
eine der beiden Teilflächen (12a, 12b) des Gegenstandes (12) hieraufhin durch Verschwenken des der einen der beiden Teilflächen (12a, 12b) zugeordneten Auflageelementes (14) gegenüber dem anderen der beiden Teilflächen (12a, 12b) des Gegenstandes (12) und dem der anderen der beiden Teilflächen (12a, 12b) zugeordneten Auflageelement (14) in eine Biegestellung verbracht wird, und
die eine der beiden Teilflächen (12a, 12b) des Gegenstandes (12) schließlich von dem verschwenkten Auflageelement (14) in der Biegestellung bis zur Abkühlung bzw. Verfestigung des Bereiches (18) zwischen den beiden Teilflächen (12a, 12b) gehalten wird.

2. Verfahren nach Anspruch 1, dadurch gekennzeichnet, daß der Gegenstand (12) in dem Bereich (18) zwischen den beiden Teilflächen (12a, 12b) von der Oberseite und/oder von der Unterseite der Auflage (14) her durch die Lasereinrichtung (48) erweicht bzw. geschmolzen wird.

3. Verfahren nach Anspruch 1 und/oder 2, dadurch gekennzeichnet, daß die Laserstrahlung von einer CO₂-Lasereinrichtung, YAK-Lasereinrichtung oder dergleichen Lasereinrichtung (48) erzeugt wird.

4. Verfahren nach einem der Ansprüche 1 bis 3, dadurch gekennzeichnet, daß die CO₂-Lasereinrichtung, YAK-Lasereinrichtung oder dergleichen Lasereinrichtung (48) entlang des zu erweichenden bzw. zu schmelzenden Bereiches (18) zwischen den beiden Teilflächen (12a, 12b) vorzugsweise kontinuierlich bewegt wird.

5. Verfahren nach einem der Ansprüche 1 bis 4, dadurch gekennzeichnet, daß die Laserstrahlung der CO₂-Lasereinrichtung, YAK-Lasereinrichtung oder dergleichen Lasereinrichtung (48) an eine, insbesondere verringerte, Dicke des Gegenstandes (12) in dem zu erweichenden bzw. zu schmelzenden Bereich (18) zwischen den beiden Teilflächen (12a, 12b) angepaßt wird.

6. Verfahren nach einem der Ansprüche 1 bis 5, dadurch gekennzeichnet, daß die Laserstrahlung der CO₂-Lasereinrichtung, YAK-Lasereinrichtung oder dergleichen Lasereinrichtung (48) an die Breite des zu erweichenden bzw. zu schmelzenden Bereiches (18) zwischen den beiden Teilflächen (12a, 12b) durch entsprechende Fokussierung angepaßt wird.

7. Verfahren nach einem der Ansprüche 1 bis 6, dadurch gekennzeichnet, daß die Widerstandskraft in dem zu erweichenden bzw. zu schmelzenden Bereich (18) zwischen den beiden Teilflächen (12a, 12b) des Gegenstandes (12) vor dem Verbringen der einen der beiden Teilflächen (12a, 12b) in die Biegestellung gemessen wird.

8. Verfahren nach Anspruch 7, dadurch gekennzeichnet, daß die Ist-Widerstandskraft in dem zu erweichenden bzw. zu schmelzenden Bereich (18) zwischen den beiden Teilflächen (12a, 12b) des Gegenstandes (12) durch insbesondere Drucksensoren (56) oder dergleichen, die an dem der einen der beiden Teilflächen (12a, 12b) zugeordneten Auflageelement (14) angeordnet sind, gemessen und der Steuereinheit (24) zum Vergleich mit einer vorbestimmten Soll-Widerstandskraft zugeführt wird.

9. Verfahren nach Anspruch 7 und/oder 8, dadurch gekennzeichnet, daß das Auflageelement (14) bei Übereinstimmung der Ist-Widerstandskraft mit der Soll-Widerstandskraft von einer diesem zugeordneten, mit der Steuereinheit (24) verbundenen Antriebseinrichtung (20) in die Biegestellung verschwenkt wird.

10. Vorrichtung zur Verformung, insbesondere zum Biegen, von im wesentlichen flächigen Gegenständen (12), wie Platten oder dergleichen, aus erweich- bzw. schmelzbarem Material, vorzugsweise zur Durchführung des Verfahrens nach einem der Ansprüche 1 bis 9, mit einer im wesentlichen ebenflächigen Auflage (14) zur Abstützung des zu biegenden Gegenstandes (12) mit wenigstens zwei Auflageelementen (14a, 14b), die zum Biegen des Gegenstandes (12) in einem Bereich (18) zwischen zwei Teilflächen (12a, 12b) des Gegenstandes (12) zueinander verschwenkbar sind, und einer Andruckeinrichtung (42) zur lösbaren Befestigung des zu biegenden Gegenstandes (12) auf der Auflage (14), gekennzeichnet durch
eine Heizeinrichtung (46) zur Erweichung bzw. Schmelzung des Bereiches (18) zwischen den beiden Teilflächen (12a, 12b) des Gegenstandes (12), die wenigstens eine im wesentlichen der Verschwenkachse der beiden Auflageelemente (14a, 14b) zugeordnete und in Längsrichtung der Verschwenkachse bewegbare Lasereinrichtung (48) umfaßt,
eine Antriebseinrichtung (20) zur Verschwenkung der Auflageelemente (14a, 14b) der Auflage (14) zueinander, sowie eine Steuereinheit (24) zur Steuerung der Andruckeinrichtung (42), Heizeinrichtung (46) und Antriebseinrichtung (20).

11. Vorrichtung nach Anspruch 10, dadurch gekennzeichnet, daß die Lasereinrichtung (48) mit der Steuereinheit (24) verbunden und von der Steuereinheit (24) betätigbar ist.

12. Vorrichtung nach Anspruch 10 und/oder 11, dadurch gekennzeichnet, daß die Heizeinrichtung (46) zwei Lasereinrichtungen (48) aufweist, wobei eine der beiden Lasereinrichtungen (48) oberhalb und eine der beiden Lasereinrichtungen (48) unterhalb der Auflage (14) angeordnet ist.

13. Vorrichtung nach einem der Ansprüche 10 bis 12, dadurch gekennzeichnet, daß die Lasereinrichtung (48) als YAK-Lasereinrichtung, CO₂-Lasereinrichtung oder dergleichen Lasereinrichtung ausgebildet ist.

14. Vorrichtung nach einem der Ansprüche 10 bis 13, dadurch gekennzeichnet, daß die Lasereinrichtung (48) entlang des Bereiches (18) zwischen den beiden Teilflächen (12a, 12b) des Gegenstandes (12), der im wesentlichen der Verschwenkachse der beiden Auflageelementen (14a, 14b) zugeordnet ist, an einer Schiene (52) oder dergleichen, insbesondere an der Andruckeinrichtung (42), vorzugsweise an einem Niederhalter (44), entlang dieser bzw. diesem verfahrbar angeordnet ist.

15. Vorrichtung nach einem der Ansprüche 10 bis 14, dadurch gekennzeichnet, daß wenigstens einem der beiden Auflageelemente (14a, 14b), vorzugsweise dem zu verschwenkenden Auflageelement (14a), eine Druckmeßeinrichtung (54) zum Messen der Widerstandskraft in dem zu erweichenden bzw. zu schmelzenden Bereich (18) zwischen den beiden Teilflächen (12a, 12b) des Gegenstandes (12) zugeordnet ist, die insbesondere mit der Steuereinheit (24) verbunden ist.

16. Vorrichtung nach Anspruch 15, dadurch gekennzeichnet, daß die Druckmeßeinrichtung (54) wenigstens einen Drucksensor (56) aufweist, der in einem der beiden Auflageelemente (14a, 14b) versenkbar aufgenommen ist und einen in Richtung der Teilfläche des Gegenstandes (12) federbelasteten Stift (58) oder dergleichen als elektrischen Kontaktgeber umfaßt.

17. Vorrichtung nach einem der Ansprüche 10 bis 16, dadurch gekennzeichnet, daß der Auflage (14) eine, insbesondere mechanisch, elektrisch, pneumatisch oder hydraulisch betätigbare, Positioniereinrichtung (30) zum Verbringen des Gegenstandes (12) in eine vorbestimmte Soll-Position zugeordnet ist, die mit der Steuereinheit (24) verbunden und von der Steuereinheit (24) betätigbar ist und insbesondere wenigstens einen Schieber (32) oder dergleichen umfaßt, der im Randbereich der Auflage (14) angeordnet und oberhalb der Auflage (14) in den vom Randbereich aufgespannten Zentralbereich der Auflage (14) hinein- bzw. aus diesem herausbewegbar ist.

18. Vorrichtung nach einem der Ansprüche 10 bis 17, dadurch gekennzeichnet, daß der Auflage (14) eine CO₂-Lasereinrichtung, HeNe-Lasereinrichtung oder dergleichen Lasereinrichtung (38) zur Messung einer Ist-Position des Gegenstandes (12) auf der Auflage (14) zugeordnet ist, die mit der Steuereinheit (24) zum Vergleich der Ist-Position des Gegenstandes (12) auf der Auflage (14) mit der vorbestimmten Soll-Position verbunden ist.

19. Vorrichtung nach einem der Ansprüche 10 bis 18, dadurch gekennzeichnet, daß die Andruckeinrichtung (42) zur lösbaren Befestigung des Gegenstandes (12) auf der Auflage (14) oberhalb der Auflage (14) vertikal bewegbar angeordnet und insbesondere mit der Steuereinheit (24) in Verbindung steht und von der Steuereinheit (24) betätigbar ist.

20. Vorrichtung nach einem der Ansprüche 10 bis 19, dadurch gekennzeichnet, daß die Andruckeinrichtung (42) wenigstens einen, vorzugsweise zwei oder meherere sich längs des Bereiches (18) zwischen den beiden Teilflächen (12a, 12b) erstreckende und zu dem Bereich (18) seitlich geringfügig beabstandet angeordnete Niederhalter (44) umfaßt, wobei jeder Niederhalter (44) jeweils einem der Auflageelemente (14a, 14b) der Auflage (14) zugeordnet ist.

21. Vorrichtung nach einem der Ansprüche 10 bis 20, dadurch gekennzeichnet, daß die Auflageelemente (14a, 14b) der Auflage (14) miteinander derart verbunden sind, daß wenigstens eines der beiden Auflageelemente (14a, 14b) nach unten und/oder nach oben aus der Ebene der Auflage (14) heraus in eine Biegestellung verschwenkbar ist.

22. Vorrichtung nach einem der Ansprüche 10 bis 21, dadurch gekennzeichnet, daß der Auflage (14) im Bereich (18) der Verschwenkachse der beiden Auflageelemente (14a, 14b) eine Abkühleinrichtung (72), insbesondere ein Gebläse (74), eine Preßlufteinrichtung oder dergleichen, zur Abkühlung bzw. Verfestigung des erweichten bzw. geschmolzenen Bereiches (18) zugeordnet ist.

23. Vorrichtung nach einem der Ansprüche 10 bis 22, dadurch gekennzeichnet, daß der Auflage (14) eine CO₂-Lasereinrichtung, HeNe-Lasereinrichtung oder dergleichen Lasereinrichtung (76) zur Messung eines Ist-Winkels zwischen den beiden Teilflächen (12a, 12b) des Gegenstandes (12) in der Biegestellung und/oder nach der Abkühlung bzw. Verfestigung des Bereiches (18) zwischen den beiden Teilflächen (12a, 12b) zugeordnet ist, die mit der Steuereinheit (24) zum Vergleich des gemessenen Ist-Winkels mit einem vorbestimmten Soll-Winkel verbunden ist.
